Europäisches Patentamt

European Patent Office

Office européen des brevets

(11) Publication number: **0 068 841**

**B1**

# EUROPEAN PATENT SPECIFICATION

(45) Date of publication of patent specification: **27.12.85**

(21) Application number: **82303321.2**

(22) Date of filing: **25.06.82**

(51) Int. Cl.⁴: **F 16 K 35/06,** G 05 G 5/00, F 16 B 41/00

(54) Clutch mechanism especially suitable for valve handles.

(30) Priority: **25.06.81 GB 8119662**

(43) Date of publication of application:
**05.01.83 Bulletin 83/01**

(45) Publication of the grant of the patent:
**27.12.85 Bulletin 85/52**

(84) Designated Contracting States:
**AT BE CH DE FR GB IT LI LU NL SE**

(56) References cited:
**FR-A- 509 891**
**FR-A- 634 217**
**FR-A- 706 469**
**US-A-3 840 041**
**US-A-3 902 519**
**US-A-3 957 077**

(73) Proprietor: **Ellis, Alan Elgar Herbert**
**14 Scott Drive Lexden**
**Colchester Essex (GB)**

(72) Inventor: **Ellis, Alan Elgar Herbert**
**14 Scott Drive Lexden**
**Colchester Essex (GB)**

(74) Representative: **Gillam, Francis Cyril et al**
**Sanderson & Co. 97 High Street**
**Colchester Essex C01 1TH (GB)**

Courier Press, Leamington Spa, England.

## Description

This invention relates to a clutch mechanism suitable for allowing drive to be imparted to or disconnected from an element to be turned. In particular — but not exclusively — the clutch mechanism of the invention is suitable for use with a fluid flow control valve having a valve stem rotatable to effect opening or closing of the valve, to allow drive from a valve operating handle to be connected to or disconnected from the valve stem. Thus, the clutch mechanism of this invention is applicable to an arrangement including a driving boss adapted for co-axial connection to or forming a part of an element to be turned and an operating member therefor, which operating member is mounted co-axially with the driving bos and is adapted to receive a torque about its axis of rotation.

In many industrial situations, it is often necessary to prevent the operation of a fluid flow control valve, either by unauthorised persons or until some other action has been taken elsewhere — for instance, the closing or opening of some other valve. Traditionally, fluid flow control valves having a conventional handwheel for effecting the operation thereof have been locked against rotation by means of a chain and padlock, the chain being passed through an aperture in the handwheel and also being passed around the pipe in which the valve is located or around some other convenient fixed member. However, such an arrangement is clearly open to abuse: the. chain can be cut with bolt croppers, or the handwheel retaining nut can be released so that the handwheel can be removed and a different handwheel fitted to the valve stem. Moreover, there is no guarantee that an operator will have securely locked the handwheel against rotation merely because he returns the padlock key to a store. In an attempt to improve on a chain and padlock, there have been designed arrangements in which there is a lever pivoted to a fixed mounting so as to be able to project through an aperture in the handwheel, a padlock being used to secure the free end of the lever and thus to prevent the lever being hinged out of engagement with the handwheel. Again, it is relatively easy to force such an arrangement and moreover the return of the key to the store does not guarantee that the handwheel has been locked.

In an attempt to overcome the disadvantages of the above-described commonly-employed means for locking fluid control valve handwheels, there has been a proposal to mount a boss on the valve stem of a fluid control valve and to modify the central hub of the handwheel so that the handwheel can be rotatably mounted on the boss. In this proposal, a pin is slidably mounted in a housing bolted to the handwheel so that the pin may be slid into engagement with a recess provided in the boss to effect a driving connection between the handwheel and the boss, or may be slid out of the recess so that the handle may rotate freely about the boss. Positively to retain the pin in either of its two positions holes are provided in the pin and in its housing, through which holes when in register a padlock may be passed. Such an arrangement is hardly any better than the traditional techniques, described above, because the pin may permanently be locked in its "engaged" position. Moreover, the provision of the housing accommodating the pin on the valve handwheel gives rise to a large projection from the handwheel, which makes it more difficult to turn, and in any event removal of the housing to allow some other pin to impart drive rarely causes much problem.

Other solutions to the problem of securing a rotatable member against tampering have been proposed — for instance in FR—A—634217. In this Specification there are several proposals for disconnecting the drive between a cylindrical wheel nut for a bicycle and surrounding handle, in which proposals a slug is slidably mounted in a bore in the handle, the slug being slidable into a hole formed in the nut to connect the drive. In all these proposals, a spring is arranged to pull the slug clear of the hole and a key-operated lock is used to effect sliding movement of the slug into the hole. In some of these proposals, the lock is removable, whereas in others the lock is maintained within the handle, and only the key for the lock is removable.

These prior art arrangements present only relatively low security, as they are intended solely for bicycle wheel nuts. Especially for the cases where the lock as a whole is removable, the drive may be connected by pushing the slug with a pointed instrument, but even in the other arrangements, overcoming the presence of the lock would hardly present any difficulty. These embodiments are not really suitable therefore for use in connection with valve operating members, where very high security, to ensure the safety of operating personnel, must be ensured.

That such security must be achieved in chemical plants has been recognised for instance in US—A—3957077, wherein there is described a valve having an operating key arranged so that possession of the key guarantees the setting of the lock, either closed or open, depending upon the particular design of valve.

It is an aim of this invention to provide a clutch mechanism suitable for example for use in conjunction with a fluid control valve for a chemical plant or the like, which mechanism at least reduces the disadvantages mentioned above associated with the known arrangements currently used for preventing unauthorised operation of a fluid flow control valve, and offers a high degree of security.

Accordingly, this invention provides a clutch mechanism suitable for allowing drive to be imparted to or disconnected from an element to be turned and comprising a driving boss adapted for co-axial connection to or forming part of the element to be turned and an operating member rotatably mounted co-axially on the driving boss over an end face thereof which operating member is adapted to receive a torque about its axis of rotation, the driving boss being provided with an off-axis recess in said end face, the operating member having a bore suitably disposed to come into and out of alignment with the driving boss recess on relative rotation between the driving boss and the operating member, and a drive peg for movement along the bore of the operating member, which clutch mechanism is characterised by the drive peg being screw-threaded for interengagement with corresponding screw-threads within the bore whereby rotation of the drive peg causes axial movement thereof along the bore to permit a portion of the peg to be engaged with the recess in the driving boss when the driving boss and operating member have the correct relative disposition, thereby to allow the operating member to impart torque to the driving boss.

Two distinct arrangements for this invention are possible: the first is that the drive peg is non-releasably mounted in the operating member and a separate key is provided to allow operation of the screw-thread means to effect axial movement of the peg; and the second is that the drive peg is formed as a key which may be engaged in the operating member to connect with the boss when drive is required but may be wholly removed from the operating member when the drive is to be disconnected. For the first case, drive between the operating member and the boss may be achieved only if an operator has the appropriate key to effect operation of the screw-thread means thereby to connect the peg with the boss, whereas for the second case, the operator must have the drive peg itself. Various ways of greatly increasing the security against unauthorised operation will now be described in greater detail, for each of these two cases.

For the case where the drive peg is non-releasably mounted in the bore in the operating member, the drive peg may be screw-threaded externally, in which case the bore in the operating member should be screw-threaded internally with a corresponding thread form; the peg can thus be mounted directly in the bore and rotation of the peg causes movement thereof along the bore axis. For such an arrangement, it preferred for the peg to have a head which is received in a counter-bore in the end face of the operating member remote from the driving boss, at least when the peg is engaged with the recess but advantageously the head of the peg always lies within the counter-bore, irrespective of whether the peg is engaged with or released from the recess. This then makes access to the head for unauthorised rotation more difficult, and the security may be enhanced by reducing the clearance between the head and the counter-bore.

The head of the peg may specially be configured so that the peg may be rotated only by means of a correspondingly-formed driving key. For example, the head may have an irregularly-shaped recess disposed axially therein, for engagement by a correspondingly-formed tool.

However, the preferred arrangement is for the head to be generally cylindrical with a domed or conically-shaped end face, there being one or more relatively small projections from the cylindrical face of the head allowing drive to be imparted to the head by means of a key having a generally cylindrical recess of the same diameter as the head, but including one or more slots corresponding in their disposition to the positions of the projections from the cylindrical surface of the head. Then, provided that the head always remains wholly within a counterbore in the operating member, not only is access to the head greatly restricted, but the cylindrical shape as well as the domed or conical end profile makes gripping of the head extremely difficult for rotation by any tool other than the appropriate key. If the angular spacing between the projections is predetermined and coded, the peg may be rotated only by a key having a like number of slots provided at exactly the same coded angular disposition and it will be appreciated that in this way, a very large number of different coded combinations are possible using only three projections — and typically 128 coded combinations are possible with relative ease. Thus one key which will operate one valve cannot be used to operate another valve. This gives added safety if a number of valves are all equipped with clutch mechanisms of this invention, as it is then not possible to open or close a valve other than the one for which the key has been designed to fit. Therefore, on a multiple-valve control line installation, a number of keys may be issued to an operator who will be safe in the knowledge that only the correct valves are operated.

Because the key for use with a peg as described above is essentially of tubular form but with slots formed in the internal cylindrical wall to receive the projections the key has a relatively high strength and torque-imparting ability for relatively thin wall thicknesses. Consequently, this allows the clearance between the head of the peg, and the counterbore in which that head fits to be reduced to a relatively small value. Moreover, by introducing means to increase the resistance to rotation of the peg, security may be enhanced further. For example, an insert of nylon or other plastics material may be provided in the operating member so as to engage the threads of the peg thereby to resist rotation of the peg unless a considerable torque is applied thereto.

As has been mentioned above, a disadvantage of many of the known arrangements for securing a handwheel of a valve is that the key for the securing arrangement may be taken away from the valve whether or not the handwheel is secured. This problem can be overcome in the just described preferred embodiment of the present invention by providing internal threads in the counterbore in the operating member, the outer surface of the key being correspondingly-threaded. Then, provided the threads on the peg and the key are of the same hand and have a similar pitch, turning the key so as to drive the peg into engagement with the driving boss will also cause the key to come into threaded engagement with the operating member; conversely, the key cannot be disengaged from the operating member without rotating the key to unscrew it from the operating member and this action automatically will rotate the peg to withdraw it from the driving boss.

It is preferred for there to be detent means — for instance, a spring-loaded ball mounted in the driving boss and engageable in a recess in the operating member — to assist alignment of the peg with the recess in the driving boss.

Turning now to the second possible arrangement of this invention as mentioned above, where the drive peg is screw-threaded, the peg is formed as a removable key which must threadingly be engaged with the operating member whenever drive is to be imparted to the driving boss. Conversely, whenever the peg is released from the operating member, there can be no drive from the operating member to the driving boss.

In order to increase security of this second configuration, and to prevent a key intended for one mechanism being used in the mechanism of another mechanism, it is possible to provide the several screw-threaded pegs (serving as keys) with threadforms of different pitches and indeed of different diameters, the operating members of different mechanisms being appropriately tapped for this purpose. Also, left-handed and right-handed threads may be provided, thus doubling the number of combinations of thread pitches and diameters available.

It is preferred to provide the peg with a plan stub which engages the recess provided in the driving boss, so that torque is not imparted through a threaded portion of the peg. To a small extent, better security can thus be obtained, for the recess in the driving boss must have a diameter sufficiently large to accommodate the stub. For instance, where the mechanism is used on a low security valve, the mechanism may have a relatively large diameter recess in the driving boss, allowing operation by means of a peg having a large or small diameter stub, whereas for higher security, the recess in the driving boss may be of a relatively small diameter, allowing operation only by such pegs as have a relatively small diameter stub.

To assist proper relative angular disposition between the driving boss and the operating member prior to insertion of the threaded peg, it is preferred for the recess in the driving boss to be fitted with a ball spring-urged outwardly such that the ball may project partially into the screw-threaded bore in the operating member. Such an arrangement has the further advantage that if a spring with a relatively high spring rate is used, it would be very difficult for an unauthorised person improperly to operate the clutch mechanism by inserting a rod along the screw-threaded bore in the operating member to engage the recess in the driving boss. The depression of the ball against the spring bias on use the proper peg would however cause no problem, thereby allowing the peg to enter the recess in the driving boss.

Whichever configuration of this invention may be employed, it is preferred for the driving boss and the operating member to have circular cross-sections of the same diameter for at least the greater part of the axial length of these two components. However, in order to hold the operating member axially close to the driving boss whilst allowing relative rotation therebetween, it is preferred for one component to be tubular at its end portion adjacent the other component, which other component is relieved to fit within the tubular end portion of the one component. Then, to retain the two components together whilst allowing relative rotation therebetween, it is convenient to provide an annular groove on the portion of reduced diameter of the other component, and at least one bore extending radially through the tubular wall of the one component, a ball being mounted in the bore to engage the annular groove and thus to prevent axial movement between the two components whilst allowing relative rotation therebetween. Various means could be provided to retain the or each ball in a position in which it projects into the annular groove, but the preferred arrangement is for the diameter of each ball to be greater than the wall thickness of the tubular end portion and rotatably to mount a sleeve around at least the end portion, for example by providing two circlips received in grooves in the driving boss, one circlip at each end of the sleeve.

This invention extends to the combination of a fluid flow control valve having a rotatable operating stem, and a clutch mechanism of this invention as described above, with the driving boss thereof mounted on the stem of the valve.

By way of example only, two specific embodiments of this invention will now be described, in detail, reference being made to the accompanying drawings, in which:—

Figure 1 is a cross-sectional view through a first embodiment of clutch mechanism for a fluid flow control valve, shown as mounted on a valve stem and in such a condition as drive can be imparted from the operating member to the driving boss;

Figure 2 is a detail view of part of the clutch mechanism of Figure 1, but in the condition where the drive of the operating member is disconnected from the driving boss;

Figure 3 is an end view on the key for use with the embodiment of Figures 1 and 2;

Figure 4 is a cross-sectional view through a second embodiment of this invention; and

Figure 5 is a side view of a screw-threaded key forming a part of the embodiment of Figure 4.

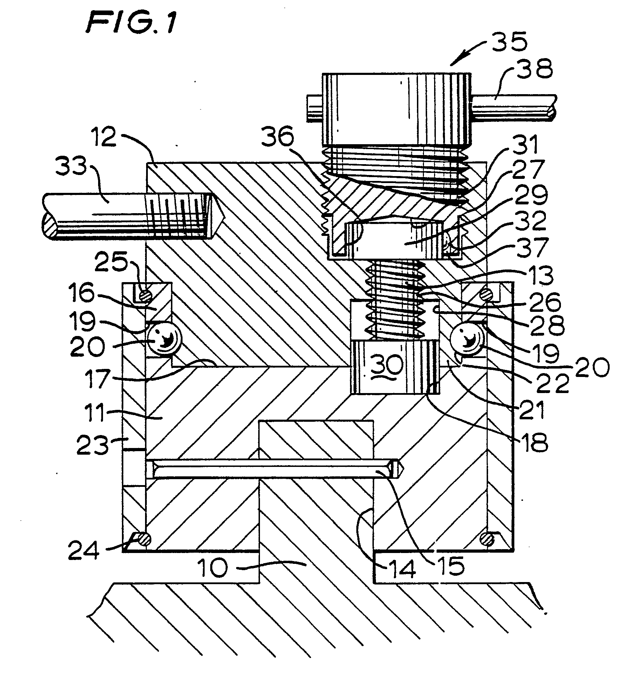

Referring initially to Figures 1 to 3, there is shown diagrammatically at 10 a valve stem of a fluid flow control valve (not shown) on which the clutch mechanism of this invention is mounted. The clutch mechanism itself comprises a driving boss 11, an operating member 12 and a screw-threaded peg 13 mounted in the operating member 12. Extending axially into the driving boss from one end face is a bore 14 for receiving the valve stem 10, the driving boss 11 being locked to the valve stem 10 by means of a rolled steel spring pin 15 press-fitted into registering bores in the driving boss and the valve stem.

The end portion 16 of the driving boss 11 remote from the valve stem 10 is tubular, the internal end face 17 of the tubular end portion 16 being provided with a non-axial recess 18 of circular cross-section. Extending through the wall of the driving boss 11 defining the tubular end portion 16 of four equi-spaced holes 19, in each of which is mounted a ball 20, the ends of the holes 19 being peened over so as to prevent a ball leaving its associated hole.

The major part of the operating member 12 is of circular cross-section of the same diameter as the driving boss 11, but the operating member has a relieved end portion 21 allowing that the portion to be fitted within the tubular end portion 16 of the driving boss. An annular groove 22 is formed around the relieved end portion 21 of the operating member, in which groove the balls 20 run, the ball being retained in engagement with the groove 22 by means of a sleeve 23 rotatably mounted around the driving boss 11. Two circlips 24 and 25 are fitted in grooves in the driving boss 11 axially to hold the sleeve 23.

At the same radius as the recess 18, there is provided a screw-threaded bore 26 in the operating member 12, one end of the bore 26 having an enlarged screw-threaded counterbore 27 and the other end having a plain counterbore 28. The screw-threaded peg 13 is fitted into the bore 26, the peg 13 having an integrally formed head 29 positioned within the counterbore 27 and a cylindrical nut 30 permanently fitted thereto, so as to lie at least partially within the counterbore 28. The head 29 is of generally cylindrical form with a conical upper surface 31, there being two radial projections 32 provided from the cylindrical surface of the head at a known angular spacing. The projections 32 may be provided for example by dome-headed hammer-drive rivets let into the head of the peg. A tommy-bar 33 is screw-threaded into a radial threaded bore provided in the operating member, as shown in Figure 1.

In order to allow turning movement to be imparted to the peg 13, there is provided a key 35 of generally cylindrical form but with a blind bore 36 let into one end, the diameter of the bore 36 being the same as the external diameter of the head 29. Two slots 38 are provided in the wall of the key defining the bore 36, which slots are at the same angular spacing as the projections 32 so as to allow the key properly to be engaged with the head of the peg and to impart driving torque thereto. The external wall of the key 35 is screw-threaded, such that the key may be engaged with the screw-threaded counterbore 27, as shown in Figure 1, but the end of the key in the region of the bore 36 has a reduced external diameter, so that that portion may pass along the counterbore 27 to be engaged with the head 29 of the peg 13, prior to the threads on the key engaging the threads within the counterbore 27. The key also is fitted with a tommy-bar 38, extending radially as shown.

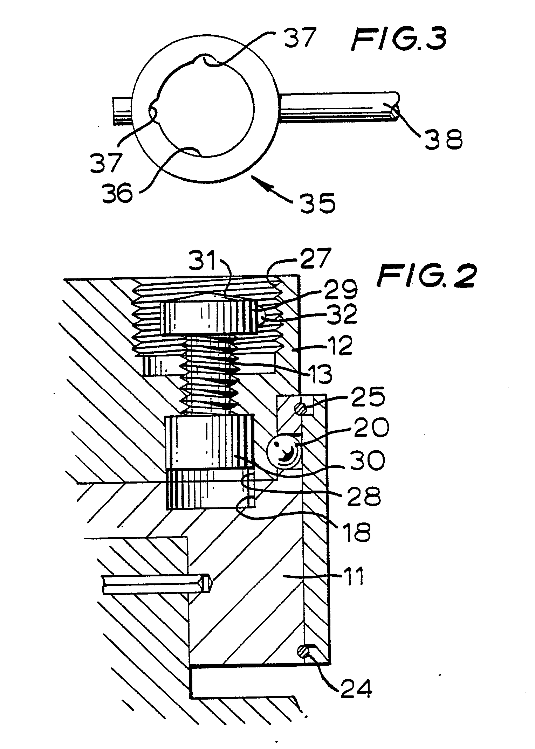

Figure 2 illustrates the embodiment of Figure 1 when the operating member 12 is disconnected from the driving boss 11, because the peg 13 has been threaded along the bore 26 until the cylindrical nut 30 has come out of engagement with the recess 18 in the driving boss 11. When in this relative disposition, the key 35 may freely be engaged with or released from the head 29 of the peg 13. If however, it is required to drive the nut 30 into engagement with the recess 18 of the driving boss 11, the peg 13 must be turned by inserting the key 35 to engage the head and then rotating the key in the appropriate sense so as to advance the peg 13 along the bore 26. This action however also engages the external threads on the key 35 with the threads in the counterbore 27. Thus preventing the key 35 being removed from the operating member 12: the key 35 can only be released from the operating member when the key has been turned to an extent sufficient also to release the nut 30 of the peg 13 from the recess 18. When the peg 13 and key 35 have the disposition illustrated in Figure 1, relative to the operating member 12, turning the operating member 12 by means of the tommy-bar 33 also will rotate the driving boss 11 hence the valve stem 10 also. Conversely however whenever the key 35 is disengaged from the operating member 12, no drive can be imparted to the driving boss 11.

In order to facilitate assembly of the clutch mechanism, a bore may be provided through a side wall of the sleeve 23 as shown in Figure 1, so that the pin 15 may be driven into the driving boss 11 and the valve stem 10 after assembly of the operating member and drive boss 11 with the sleeve 23. If required to enhance security, the operating member 12 may be provided with a flange immediately adjacent the end of the sleeve 23 so as to protect the circlip 25 from improper removal, and disassembly may then take place only by removal of the circlip 24. Because however this circlip 24 would lie close adjacent the body of a valve, its removal would be virtually impossible. Moreover, because pin 15 is made of hardened spring steel press-fitted into the driving boss 11 and valve stem 10, this may be removed only with extreme difficulty if indeed it proves possible to remove at all.

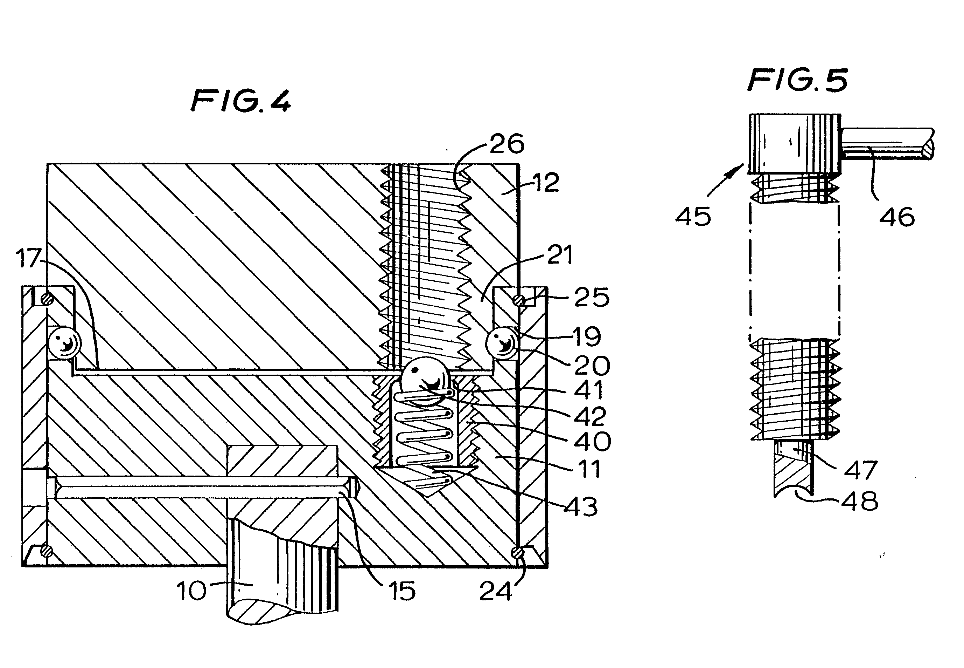

Turning now to Figures 4 and 5, there is shown a second embodiment of this invention which is generally similar to the first-described embodiment, except that instead of providing a peg 13 permanently fitted into the operating member 12 and a separate key 35, the peg is integral with the operating key and is removed when there is to be no connection between the operating member and the driving boss. In the embodiment of Figures 4 and 5, parts similar to and performing the same function as the corresponding parts of the first embodiment are given like reference characters and will not be described in detail again here.

In the second embodiment of Figures 4 and 5, the screw-threaded bore 26 in the operating member 12 extends from one axial end face of the operating member to the other. The recess 18 in the driving boss 11, provided at the same radius as the bore 26, is internally threaded, there being a hollow slug 40 threaded into the recess 18. Retained in the recess 18 by means of a flange 14 on the lug 40 is a ball 42, there being a spring 43 located between the ball 42 and the blind end of the recess 18. In this way, the ball 42 projects beyond the axial end face 17 of the driving boss 11 and may serve as a detent which located in the bore 26 in the operating member 12, thereby to assist proper alignment between the operating member and driving boss when the key is to be used to interconnect these two components.

Figure 5 shows the key-and-peg for use with the arrangement shown in Figure 4. This key has a main body 45 externally screw-threaded for interengagement with the threads of the bore 26 in the operating member 12, a handle 46 projecting radially from one end of the body 45. At the other end of the body there is provided a plain stub 47 the diameter of which is such that the stub 47 will fit into the circular aperture within the flange 41 of the slug 40. As shown in Figure 5, the free end 48 of the stub 47 is of concave form, to allow proper engagement with the ball 42 as the body 45 is threaded into the bore 26.

With the mechanism in the condition shown in Figure 4, no drive can be imparted from the operating member 12 to the driving boss 11, though the ball 42 may serve as a detent to ensure correct setting of the angular disposition between the operating member 12 and the driving boss 11 prior to using the key (Figure 5). By providing a spring 43 with an appropriately high spring rate, depression of the ball 42 by means of an unauthorised tool — such as a rod inserted into the bore 26 — can be made most difficult, in view of the need to maintain a considerably high axial pressure on the rod whilst at the same time turning the operating member 12. However, depression of the ball 42 against the force of the spring 43 is relatively easy if the proper key (Figure 5) is used, owing to the co-operating forms of the ball 42 and of stub 47, together with the leverage provided by the long co-operating threads of the bore 26 and the body 45.

Security can be enhanced by providing different clutch mechanism with different thread forms, hands and diameters for the bore 26 and for the key (Figure 5). Moreover, the size of the aperture within the flange 41 also may be varied, to prevent a key with a relatively large diameter stub 47 being used in conjunction with a mechanism having a small-sized aperture.

The arrangement of Figures 4 and 5 can be modified for fitting to a rising stem valve. For this, the driving boss 11 would be provided with an axial threaded bore for engagement with the threaded rising stem of the valve, the operating member 12 being provided with an axial clearance bore for the rising stem. Also, means would have to be provided to restrain axial movement of the clutch mechanism, so that rotation of the driving boss 11 on turning the operating member 12, when the driving boss and operating member are coupled together, will cause the stem valve to be raised or lowered, as appropriate. The arrangement of Figures 1 and 2 may similarly be modified, but additionally the diameter of the components 11 and 12 would have to be increased, to allow the bore, 26 to be moved radially outwardly to an extent sufficient for accommodation of the rising stem centrally within those components.

## Claims

1. A clutch mechanism suitable for allowing drive to be imparted to or disconnected from an element (10) to be turned and comprising a driving boss (11) adapted for co-axial connection to or forming part of the element to be turned and an operating member (12) rotatably mounted co-axially on the driving boss over an end face thereof which operating member is adapted to receive a torque about its axis of rotation, the driving boss being provided with an off-axis recess (18) in said end face, and the operating member having a bore (26) suitably disposed to come into and out of alignment with the driving boss recess on relative rotation between the driving boss and the operating member, and a drive peg (13, 45) for movement along the bore of the operating member, characterised in that the drive peg (13, 45) is screw-threaded for interengagement with corresponding screw-threads within the bore (26), whereby rotation of the drive peg (13, 45) causes axial movement thereof along the bore to permit a portion (30, 47) of the peg to be engaged with the recess (18) in the driving boss when the driving boss and operating member have the correct relative disposition, thereby to allow the operating member (12) to impart torque to the driving boss (11).

2. A clutch mechanism according to claim 1, further characterised in that the drive peg (13) is non-releasably received in the bore (26) in the operating member.

3. A clutch mechanism according to claim 2, further characterised in that the peg (13) has a head (29) which is received in a counterbore (27) in the end face of the operating member remote from the driving boss, the head (29) of the peg (13) being configured so as to be rotatable only by means of a correspondingly-formed driving key (35).

4. A clutch mechanism according to claim 3, characterised in that the head (29) of the peg (13) is generally cylindrical with a domed or conically-shaped end face, there being one or more relatively small projections (32) from the cylindrical face of the head (29) allowing drive to be imparted to the head by means of a key (35) having a generally cylindrical recess (36) of the same diameter as the head, but including one or more slots (37) the disposition of which corresponds to that of the or each projection (32) from the cylindrical surface of the head.

5. A clutch mechanism according to claim 4, further characterised in that an internal screw-thread is provided in the counterbore (27) in the operating member (12) and the outer surface of the key (35) for the peg is provided with an external corresponding thread.

6. A clutch mechanism according to claim 1, further characterised in that the drive peg (45) is formed as a removable key which must threadingly be engaged with the operating member whenever drive is to be imparted to the driving boss.

7. A clutch mechanism according to claim 6, characterised in that the drive peg (45) is provided with a plain stub (47) which engages the recess provided in the driving boss, so that torque may be imparted to the driving boss through the plain stub of the peg from the operating member, the recess in the driving boss being fitted with a ball (42) spring-urged outwardly such that the ball may project partially into the screw-threaded bore (26) in the operating member when not depressed by the plain stub (47).

8. A clutch mechanism according to any of the preceding claims, further characterised in that the driving (11) and the operating member (12) have circular cross-sections of the same diameter for at least the greater part of the axial length thereof, the driving boss being tubular at its end portion adjacent the operating member and the operating member being relieved to fit within the tubular end portion of the driving boss.

9. A clutch mechanism according to claim 8, characterised in that there is provided an annular groove on the portion of reduced diameter of the operating member and there is at least one bore (19) extending radially through the tubular wall of the driving boss, a ball (20) being mounted in the bore (19) to engage the annular groove and thus to prevent axial movement between the two components whilst allowing relative rotation therebetween, and the ball being retained in a position by means of a sleeve (23) rotatably mounted around at least the end portion of the driving boss component, the or each ball (20) having a diameter greater than the wall thickness of the tubular portion of the driving boss.

10. The combination of a fluid flow control valve having a rotatable operating stem, and a clutch mechanism according to any one of the preceding claims with the driving boss thereof mounted on the rotatable operating stem of the valve.

**Revendications**

1. Mécanisme d'embrayage convenant pour permettre qu'un mouvement d'entraînement soit communiqué à un élément à faire tourner, ou coupé de celui-ci, et comprenant un bossage d'entraînement propre à être relié coaxialement à une partie de l'élément à faire tourner ou à faire partie de cet élément, et un organe de manoeuvre monté à rotation coaxialement au bossage d'entraînement, sur une face d'extrémité de celui-ci, cet organe de manoeuvre étant propre à recevoir un couple autour de son axe de rotation, le bossage d'entraînement étant pourvu d'un évidement décalé par rapport à son axe dans ladite face d'extrémité et l'organe de manoeuvre présentant une forure disposée convenablement pour venir en alignement et hor d'alignement avec l'évidement du bossage d'entraînement lors d'une rotation relative entre le bossage d'entraînement et l'organe de manoeuvre, et un goujon d'entraînement pour avoir un mouvement suivant la forure de l'organe de manoeuvre, caractérisé en ce que le goujon d'entraînement (13, 45) est pourvu de filets de vis pour coopérer avec des filets de vis correspondants de la forure (26), en sorte que la rotation du goujon d'entraînement (13, 45) provoque en mouvement axial de celui-ci suivant la forure pour permettre à une partie (30, 47) du goujon de coopérer avec l'évidement (18) du bossage d'entraînement lorsque le bossage d'entraînement et l'organe de manoeuvre, sont en disposition relative correcte, en permettant ainsi à l'organe de manoeuvre (12) de communiquer un couple au bossage d'entraînement (11).

2. Mécanisme d'embrayage suivant la revendication 1, caractérisé en ce que le goujon d'entraînement (13) est reçu d'une manière non dégageable dans la forure (26) de l'organe de manoeuvre.

3. Mécanisme d'embrayage suivant la revendication 2, caractérisé encore en ce que le goujon (13) a une tête (29) sui est reçue dans un contre-alésage (27) dans la face d'extrémité de l'organe de manoeuvre, éloignée du bossage d'entraînement, la tête (29) du goujon (13) ayant une configuration telle qu'elle ne puisse être mise en rotation que part une clé d'entraînement (35) de forme correspondante.

4. Mécanisme d'embrayage suivant la revendication 3, caractérisé en ce que la tête (29) du goujon (13) est de forme généralement cylindrique, avec une face d'extrémité en dôme ou en forme conique, une ou plusieurs saillies (32) relativement petites de la face cylindrique de la tête (29) permettant que le mouvement d'entraînement soit communiqué à la tête par une clé (35) ayant un évidement (36) de forme généralement cylindrique, de même diamètre que la tête, mais comprenant une ou plusieurs fentes (37) dont la disposition correspond à celle de la ou de chaque saillie (32) de la surface cylindrique de la tête.

5. Mécanisme d'embrayage suivant la revendication 4, caractérisé en ce qu'un filet de vis intérieur est prévu dans le contre-alésage (27) de l'organe de manoeuvre (12) et en ce que la surface extérieure de la clé (35) pour le goujon est munie d'un filet extérieur correspondant.

6. Mécanisme d'embrayage suivant la revendication 1, caractérisé en ce que la goujon d'entraînement (45) est conformé un clé amovible qui doit coopérer à filets avec l'organe de manoeuvre chaque fois qu'un mouvement d'entraînement doit être communiqué au bossage d'entraînement.

7. Mécanisme d'embrayage suivant la revendication 6, caractérisé en ce que le goujon d'entraînement (45) est muni d'un bout uni (47) qui coopère avec l'évidement prévu dans le bossage d'entraînement, en sorte qu'un couple puisse être imposé au bossage d'entraînement par le bout uni du goujon de l'organe de manoeuvre, l'évidement dans le bossage d'entraînement étant équipé d'une bille (42) sollicité vers l'extérieur par un ressort, en sorte que la bille puisse faire saillie partiellement dans la forure taraudée (26) de l'organe de manoeuvre lorsqu'elle n'est pas abaissée par le bout uni (47).

8. Mécanisme d'embrayage suivant l'une quelconque des revendications précédentes, caractérisé en ce que le bossage d'entraînement (11) et l'organe de manoeuvre (12) ont des sections transversales circulaires de même diamètre sur au moins la plus grande parti de leur longueur axiale, le bossage d'entraînement étant tubulaire dans sa partie d'extrémité adjacente à l'organe de manoeuvre et l'organe de manoeuvre étant évidé pour s'adapter dans la partie d'extrémité tubulaire du bossage d'entraînement.

9. Mécanisme d'embrayage suivant la revendication 8, caractérisé en ce qu'une rainure annulaire est prévue sur la partie de diamètre réduit de l'organe de manoeuvre et en ce qu'il y a au moins une forure (19) s'etendant radialement à travers la paroi· tubulaire du bossage d'entraînement, une bille (20) étant montée dans la forure (19) pour coopérer avec la rainure annulaire empêcher ainsi un mouvement axial entre les deux éléments, tout en permettant une rotation relative de l'un par rapport à l'autre, la bille étant maintenue en place par un manchon (23) monté de façon à pouvoir tourner autour d'au moins la partie d'extrémité de l'élément bossage d'entraînement, la bille (20) ou chaque bille (20) ayant un diamètre supérieur à l'épaisseur de la paroi de la partie tubulaire du bossage d'entraînement.

10. Combinaison d'une valve de commande de l'écoulement d'un fluide, ayant une tige de manoeuvre capable de tourner, et d'un mécanisme d'embrayage suivant l'une quelconque des revendications précédentes, où son bossage d'entraînement est monté sur la tige de manoeuvre pouvant tourner, de la valve.

**Patentansprüche**

1. Kupplungsvorrichtung, die geeignet ist, um Antrieb an ein zu drehendes Element (16) zu übertragen oder davon zu trennen, mit einem Antriebsfortsatz (11), der zur koaxialen Verbindung mit dem zu drehenden Element geeignet ist oder einen Teil desselben bildet und mit einem Betätigungsteil (12), das drehbar koaxial auf dem Antriebsfortsatz über einer Endfläche davon montiert ist, wobei das Betätigungsteil zur Aufnahme eines Drehmoments um seine Drehachse gestaltet ist, der Antriebsfortsatz mit einer exzentrischen Vertiefung (18) in der Endfläche versehen ist und das Betätigungsteil eine Bohrung (26) aufweist, die geeignet angeordnet ist, um in oder aus einer Ausrichtung mit der Antriebsfortsatz-Vertiefung bei einer Relativdrehung zwischen Antriebsfortsatz und Betätigungsteil zu kommen, und mit einem Antriebszapfen (13, 45) zur Bewegung entlang der Bohrung des Betätigungsteils, dadurch gekennzeichnet, daß der Antriebszapfen (13, 45) mit einem Gewinde versehen ist, um mit einem entsprechenden Gewinde in der Bohrung (26) zusammenzuwirken, wodurch eine Drehung des Antriebszapfens (13, 45) dessen Axialbewegung entlang der Bohrung bewirkt, um es einem Teil (30, 47) des Zapfens zu gestatten, in die Vertiefung (18) des Antriebsfortsatzes einzugreifen, wenn der Antriebsfortsatz und das Betätigungsteil die richtige Relativlage haben, wodurch das Betätigungsteil (12) ein Drehmoment auf den Antriebsfortsatz (11) übertragen kann.

2. Kupplungsvorrichtung nach Anspruch 1, dadurch gekennzeichnet, daß der Antriebszapfen (13) unlösbar in der Bohrung (26) des Betätigungsteils sitzt.

3. Kupplungsvorrichtung nach Anspruch 2, dadurch gekennzeichnet, daß der Zapfen (13) einen Kopf (29) aufweist, der in einer Senkbohrung (27) in der Endfläche des Betätigungsteils sitzt, die von dem Antriebsfortsatz entfernt ist, wobei der Kopf (29) des Zapfens (13) so geformt ist, daß er lediglich durch einen entsprechend geformten Antriebsschlüssel (35) gedreht werden kann.

4. Kupplungsvorrichtung nach Anspruch 3, dadurch gekennzeichnet, daß der Kopf (29) des Zapfens (13) im allgemeinen zylindrisch mit einer gewölbten oder konisch geformten Endfläche ist, daß ein oder mehrere verhältnismäßig kleine Vorsprünge (32) von der zylindrischen Fläche des Kopfs (29) vorstehen, die es gestatten, daß ein Antrieb auf den Kopf durch einen Schlüssel (35) übertragen wird, der eine im allgemeinen zylindrische Vertiefung (36) von gleichem Durchmesser wie der Kopf aufweist, jedoch ein oder mehrere Schlitze (37) besitzt, deren Anordnung derjenigen des oder jedes Vorsprungs (32) von der zylindrischen Oberfläche des Kopfs entspricht.

5. Kupplungsvorrichtung nach Anspruch 4, dadurch gekennzeichnet, daß ein Innengewinde in der Senkbohrung (27) in dem Betätigungsteil (12) vorgesehen ist und daß die äußere Oberfläche des Schlüssels (35) für den Zapfen mit einem entsprechenden Außengewinde versehen ist.

6. Kupplungsvorrichtung nach Anspruch 1, dadurch gekennzeichnet, daß der Antriebszapfen (45) als abnehmbarer Schlüssel ausgebildet ist, der immer dann in das Betätigungsteil geschraubt werden muß, wenn ein Antrieb auf den Antriebsfortsatz übertragen werden soll.

7. Kupplungsvorrichtung nach Anspruch 6, dadurch gekennzeichnet, daß der Antriebszapfen (45) mit einem glatten Zapfen (47) versehen ist, der in die im Antriebsfortsatz vorgesehene Vertiefung derart eingreift, daß ein Drehmoment auf den Antriebsfortsatz durch den glatten Zapfen des Antriebszapfens von dem Betätigungsteil übertragen werden kann, wobei die Vertiefung in dem Antriebsfortsatz mit einer nach außenfederbelasteten Kugel (42) derart bestückt ist, daß die Kugel teilweise, in die Gewindebohrung (26) des Betätigungsteils ragt, wenn sie nicht von dem glatten Zapfen (47) niedergedrückt wird.

8. Kupplungsvorrichtung nach einem der vorhergehenden Ansprüche, dadurch gekennzeichnet, daß der Antriebsfortsatz (11) und das Betätigungsteil (12) kreisförmige Querschnitte von gleichem Durchmesser über zumindest den größeren Teil ihrer axialen Länge haben, wobei der Antriebsfortsatz in seinem Endabschnitt in der Nähe des Betätigungsteils rohrförmig und das Betätigungsteil ausgenommen ist, um in den rohrförmigen Endabschnitt des Antriebsfortsatzes zu passen.

9. Kupplungsvorrichtung nach Anspruch 8, dadurch gekennzeichnet, daß eine Ringnut in dem im Durchmesser reduzierten Abschnitt des Betätigungsteils vorgesehen ist und daß sich zumindest eine Bohrung (19) radial durch die rohrförmige Wand des Antriebsfortsatzes erstreckt, daß eine Kugel (20) in die Bohrung (19) eingesetzt ist, um in die Ringnut einzugreifen und so eine Axialbewegung zwischen den zwei Bauteilen zu verhindern, während ein relative Drehung dieser Teile zugelassen wird, und daß die Kugel durch eine Buchse (23) in ihrer Lage gehalten wird, die drehbar um zumindest den Endabschnitt des Antriebsfortsatzbauteils montiert ist, wobei die oder jede Kugel (20) einen größeren Durchmesser als die Wandstärke des rohrförmigen Abschnittes des Antriebsfortsatzes hat.

10. Kombination eines Fluidströmmungs-Steuerventils mit einer drehbaren Betätigungsachse mit einer Kupplungsvorrichtung nach einem der vorhergehenden Ansprüche, wobei deren Antriebsfortsatz auf der drehbaren Betätigungsachse des Ventils montiert ist.

# FIG.1

FIG.3

FIG.2

FIG.5

FIG.4